# FASCICULE DE BREVET EUROPEEN

(11) **EP 1 451 910 B1**
(45) Date de publication et mention de la délivrance du brevet: **26.10.2005**
(21) Numéro de dépôt: 02801088.2
(22) Date de dépôt: 02.12.2002
(51) Int. Cl.: H02G 3/06

(54) **ECLISSE DE RACCORDEMENT POUR RACCORDER DEUX PORTIONS D'UN CHEMIN DE CABLES EN FILS, PORTION DE CHEMIN DE CABLES EN FILS EQUIPEE, D'UNE TELLE ECLISSE ET CHEMIN DE CABLES EN FILS AYANT DEUX PORTIONS RACCORDEES PAR UNE TELLE ECLISSE**
VERBINDUNGSSPLICEPLATTE ZUR VERBINDUNG ZWEIER TEILE EINER VERDRAHTUNGSKABELEINLAGE, VERDRAHTUNGSKABELEINLAGE DAMIT UND VERDRAHTUNGSKABELEINLAGE MIT ZWEI MIT EINER SOLCHEN SPLICEPLATTE VERBUNDENEN TEILE
CONNECTION SPLICE PLATE FOR CONNECTING TWO PORTIONS OF A WIRE CABLE TRAY, WIRE CABLE TRAY EQUIPPED WITH SAME AND WIRE CABLE TRAY HAVING TWO PORTIONS CONNECTED WITH SUCH A SPLICE PLATE

(30) Priorité: 06.12.2001 FR 0115777
(43) Date de publication de la demande: 01.09.2004
(73) Titulaire: I.C.M. Group, 21500 Montbard (FR)
(72) Inventeur: BOLTZ, Roland, F-60190 Estrées-Saint-Denis (FR)
(74) Mandataire: Santarelli
(86) Numéro de dépôt international: PCT/FR2002/004126
(87) Numéro de publication internationale: WO 2003/049247

(56) Documents cités:
- FR-A- 2 017 070
- US-B1- 6 247 871

## Description

La présente invention concerne d'une manière générale les chemins de câbles en fils.

Ainsi qu'on le sait, ces chemins de câbles en fils comportent, sous forme maillée, des fils de deux types différents, à savoir, d'une part, des fils longitudinaux, communément appelés fils de chaîne, qui courent, longitudinalement, de manière rectiligne ou quasi rectiligne, sur toute leur longueur, et, d'autre part, établis transversalement de place en place le long de ces fils longitudinaux, en étant dûment assujettis à ceux-ci, des fils transversaux conformés en U, communément appelés fils de trame, l'ensemble formant globalement trois panneaux, en pratique plans ou sensiblement plans, à savoir un panneau de fond et deux panneaux latéraux.

Ces chemins de câbles en fils sont couramment utilisés pour assurer, à la manière de goulotte, le soutien, le logement et la protection de câbles électriques ou similaires.

Par câbles électriques, on entend en effet ici, et dans ce qui suit, non seulement les câbles propres au transport et à la distribution de l'énergie électrique, mais aussi les câbles et fibres propres à une transmission d'information de manière électrique, optique ou autre.

A l'égard de tels câbles électriques, les chemins de câbles en fils ont de nombreux avantages qui les font apprécier des installateurs électriciens, et, notamment, des avantages de facilité de pose, et donc d'économie, de flexibilité, les câbles électriques pouvant en être sortis par l'une quelconque de leurs mailles, de transparence, et, donc, de repérage des câbles électriques, de ventilation, de propreté, de sécurité, tant pour les câbles électriques que pour les utilisateurs, et de performances.

Comme on le sait, un chemin de câbles comprend plusieurs portions ; il est constitué de plusieurs tronçons assemblés bout à bout ou faisant un angle entre eux ou réalisant une dérivation en T, en X, en Y ou autre ; les portions sont dès lors des tronçons différents ou sont un même tronçon : dans le premier cas, les portions sont assemblées bout à bout ; dans le second cas, un panneau latéral du tronçon a été sectionné pour réaliser les deux portions : l'éclisse est mise en place dans la section après mise en forme de l'autre panneau latéral ; on peut ainsi réaliser des courbes de divers rayons : en effet, bien que celui-ci soit fonction de la largeur du chemin de câbles, si une éclisse ne permet pas de réaliser l'angle souhaité, le panneau latéral du tronçon peut être sectionné en plusieurs endroits et une éclisse mise en place dans chaque section.

Le document US-B1-624 7871 décrit une éclisse de raccordement du type mentioné ci-dessus.

La présente invention a pour but de proposer une éclisse de raccordement qui permette de raccorder très rapidement deux portions de tels chemins de câbles en fils, sans mise en oeuvre de vis ou boulons, ladite éclisse n'étant pas agressive, pouvant être pré-montée sur l'une des portions du chemin de câbles, et même récupérée après utilisation.

Selon l'invention, une éclisse de raccordement pour raccorder deux portions d'un chemin de câbles en fils constitué de fils de deux types différents, d'une part, des fils de chaîne et, d'autre part, des fils de trame, le raccordement desdites deux portions, ainsi donc que leur assemblage, étant effectué par l'intermédiaire de leurs fils de trame placés en bout, est caractérisée par le fait qu'elle comprend un corps en forme de U ayant deux ailes et une âme, lesdites ailes comportant chacune au moins deux échancrures à bords parallèles, les échancrures d'une aile faisant face aux échancrures de l'autre aile, les bords parallèles entre eux d'une échancrure étant parallèles aux bords parallèles entre eux de l'autre échancrure, l'un des bords d'au moins l'une des échancrures se faisant face portant une patte dite de verrouillage, lesdites pattes de verrouillage étant adaptées à être par pliage rabattues, vers l'intérieur du U du corps en U, sur chacun desdits fils de trame placés en bout.

Avantageusement, au moins une patte de verrouillage permet le montage à rotation de l'éclisse sur une portion du chemin de câbles.

Avantageusement, l'âme du corps en U est en forme de U ouvert, les ailes du corps en U s'étendant depuis l'âme dans la concavité de ladite âme en U ouvert.

De préférence, l'une des ailes du U du corps en U porte les deux pattes de verrouillage.

Avantageusement, les pattes de verrouillage s'étendent, avant pliage pour verrouillage, perpendiculairement aux plans des ailes.

De préférence, les échancrures s'étendent perpendiculairement au fond, qui est plan, du U ouvert de l'âme.

Avantageusement, les parties latérales du U ouvert constituant l'âme du corps s'étendent depuis le fond plan en faisant entre elles un angle de l'ordre de 120 degrés.

Selon une autre forme de réalisation, chaque aile comporte quatre échancrures.

De préférence, les distances entre deux échancrures adjacentes sont inégales.

L'invention a également pour objet un chemin de câbles en fils ayant deux portions raccordées par au moins une éclisse de raccordement telle que ci-dessus.

Avantageusement, les deux portions du chemin de câbles sont deux tronçons indépendants assemblés bout à bout ; en variante, les deux portions du chemin de câbles constituent un même tronçon d'un chemin de câbles, dont un panneau latéral a été sectionné, et les deux portions sont raccordées par une éclisse de raccordement, l'éclisse ayant été mise en place dans ladite section après mise en forme de l'autre panneau latéral, ce qui permet de réaliser un coude sur le chemin de câbles.

De préférence, l'éclisse est montée par ses échancrures sur des fils de trame placés en bout, et se faisant face, des deux chemins de câbles, les pattes étant rabattues sur lesdites ailes ; l'éclisse est montée sur les fils de trame depuis l'intérieur du chemin de câbles, son âme étant située à l'intérieur de celui-ci.

Avantageusement, l'éclisse s'étend entre deux fils de chaîne.

De préférence, la largeur de l'âme du corps en U de l'éclisse est globalement égale, au jeu de montage près, à la distance qui sépare les deux fils de chaîne entre lesquels elle s'étend.

Un autre objet de l'invention est une portion de chemin de câbles en fils équipée d'au moins une éclisse de raccordement telle que ci-dessus, ladite éclisse étant montée à pivotement autour d'une aile d'un fil de trame en bout et s'étendant à l'intérieur de la portion du chemin de câbles le long de son panneau latéral défini notamment par ladite aile.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue en élévation d'une éclisse de raccordement selon l'invention ;
- la figure 2 est une vue en coupe selon II-II de la figure 1 ;
- la figure 3 est une vue selon la flèche III de la figure 1 ;
- la figure 4 est une vue montrant le raccordement de deux portions de chemin de câbles par l'éclisse des figures 1 à 3 ;
- la figure 5 est une vue selon la flèche V de la figure 4 ;
- la figure 6 est une vue analogue à la figure 4 mais en perspective ;
- la figure 7 est analogue à la figure 6 mais représente une variante ;
- la figure 8 est une vue en élévation de l'éclisse de la variante de la figure 7;
- la figure 9 est une vue en coupe selon IX-IX de la figure 8 ;
- la figure 10 est une vue selon la flèche X de la figure 8 ;
- la figure 11 est une vue partielle de dessus illustrant le montage de la figure 7 ;
- les figures 12 et 13 illustrent deux autres positions de montage de l'éclisse des figures 7 à 11.

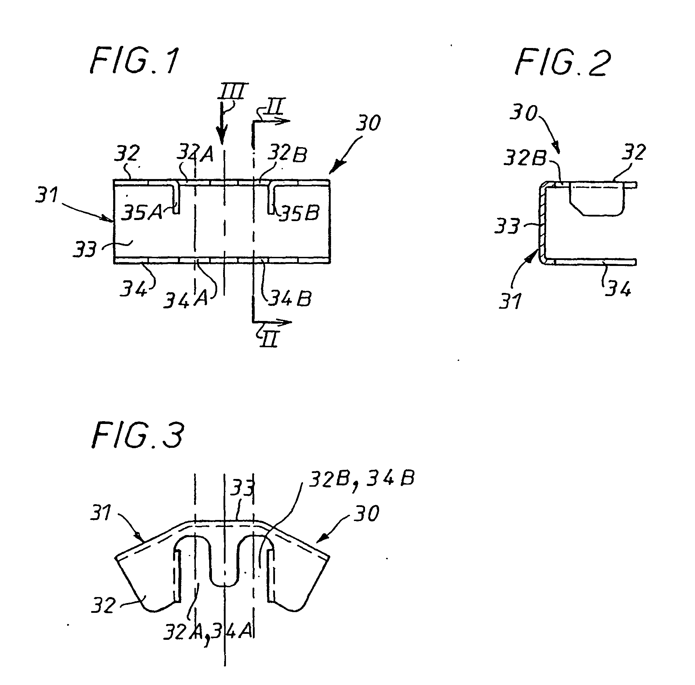

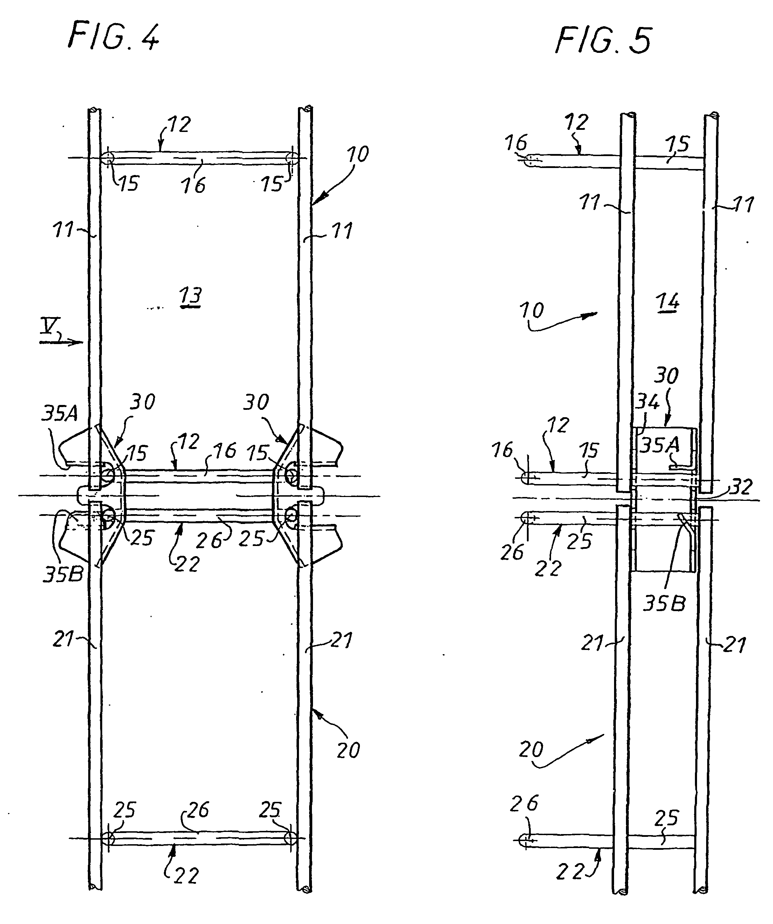

En se reportant aux figures 1 à 3, on voit une éclisse 30 de raccordement destinée à raccorder l'une à la suite de l'autre deux portions de chemin de câbles 10, 20 en fils, figures 4 à 6.

Ces portions de chemin de câbles 10, 20 en fils comportent, de manière connue en soi, sous forme maillée, des fils de deux types différents, à savoir, s'agissant de la portion 10, des fils longitudinaux 11 qui courent longitudinalement de manière rectiligne ou sensjblement rectiligne sur toute sa longueur et, d'autre part, établis transversalement de place en place, suivant un pas régulier, le long de ces fils longitudinaux 11, en étant dûment assujettis à ceux-ci, des fils transversaux 12 conformés en U, l'ensemble formant globalement, à la manière d'une goulotte, trois panneaux 13, 14, à savoir un panneau de fond 13 et deux panneaux latéraux 14.

En pratique, les fils 11, 12 sont des fils métalliques, plus précisément en acier, et à leur croisement ils sont assujettis les uns aux autres par soudage.

Par construction, les fils 11, 12 se croisent à des niveaux différents ; ici, les fils longitudinaux 11 s'étendent à l'extérieur des fils transversaux 12.

Dans la forme de réalisation représentée, tous les fils 11, 12 sont des fils ronds, c'est-à-dire que leur section transversale est circulaire.

Ici, tel que représenté, le diamètre de la section transversale est le même pour tous les fils, mais il n'en est pas nécessairement toujours ainsi.

Dans la forme de réalisation représentée, le panneau de fond 13 n'a pas de fil longitudinal 11 et chacun des panneaux latéraux ne comporte que deux fils longitudinaux 11, à savoir un fil longitudinal 11 intermédiaire, qui intervient sensiblement à mi-hauteur et un fil longitudinal 11 de rive.

Mais bien entendu ce nombre de fils longitudinaux 11 peut être différent ; de même, le panneau de fond 13 peut comporter des fils longitudinaux 11 et leur nombre peut être quelconque.

La portion 20 du chemin de câbles est identique à la portion 10 et ses éléments constitutifs portent les mêmes références que ceux de la portion 10 augmentées de 10.

Les fils transversaux 12, 22 étant en forme de U, on a désigné par 15, 25 leurs ailes et 16, 26 leur âme, respectivement.

Comme on le sait, les fils longitudinaux 11, 21 sont communément appelés fils de chaîne, et les fils transversaux 12, 22 fils de trame.

Pour raccorder l'une à la suite de l'autre les portions 10, 20, celles-ci sont préparées en sorte que, à leur extrémité par laquelle elles vont être aboutées, les fils de chaîne sont coupés quasiment au droit du fil de trame d'extrémité, lequel se trouve alors en bout de la portion correspondante, comme cela est visible sur les figures.

L'éclisse de raccordement 30 comprend un corps 31 en forme de U ayant deux ailes 32, 34 et une âme 33.

Les ailes 32,34 comportent chacune deux échancrures à bords parallèles.

Plus précisément, l'aile 32 comporte deux échancrures 32A, 32B à bords parallèles ; les bords parallèles entre eux de l'échancrure 32A ou 32B, sont parallèles aux bords parallèles entre eux de l'échancrure 32B, ou 32A.

L'un des bords des échancrures 32A, 32B porte une patte dite de verrouillage, respectivement 35A, 35B ; ici, les pattes 35A et 35B sont portées par les bords les plus éloignés l'un de l'autre des échancrures 32A, 32B.

L'aile 34 comporte également deux échancrures 34A, 34B à bords parallèles ; les bords parallèles entre eux de l'échancrure 34A, ou 34B, sont parallèles aux bords parallèles entre eux de l'échancrure 34B, ou 34A.

Les échancrures 34A, 34B ne sont pas munies de pattes de verrouillage dans l'exemple représenté mais il pourrait en être autrement.

Les échancrures 32A et 32B, d'une part, et les échancrures 34A et 34B, d'autre part, sont disposées verticalement, par rapport à la figure 1, les unes au droit des autres, se faisant face.

Les échancrures 32A, 32B, 34A, 34B sont adaptées à recevoir les ailes 15, 25 des fils de trame 12, 22 des chemins de câbles 10 et 20, comme décrit ci-dessous ; dès lors, leur largeur est prévue en conséquence.

L'âme 33 du corps 31 de l'éclisse 30 est en forme de U ouvert ; les ailes 32, 34 du corps 31 s'étendent, depuis l'âme 33, dans la concavité de ladite âme 33 en U ouvert ; les parties latérales du U ouvert s'étendent depuis le fond dudit U ouvert, ici prévu plat, en faisant entre elles un angle de l'ordre de 120 degrés.

Dans l'exemple représenté, les échancrures 32A, 32B, 34A, 34B sont globalement perpendiculaires au fond plat dudit U ouvert.

On remarquera que les parties latérales du U ouvert se raccordent au fond plat de celui-ci selon des zones arrondies, non agressives.

Il en est d'ailleurs de même du raccordement des ailes 32, 34 du corps 31 à l'âme 33 de celui-ci.

On remarquera également que les pattes de verrouillage 35A, 35B s'étendent à l'intérieur du corps 31 de l'éclisse 30 ; ici, elles s'étendent, avant pliage pour verrouillage, perpendiculairement aux plans des ailes 32 et 34, lesquelles sont parallèles entre elles.

Une telle éclisse est mise en oeuvre comme suit.

En se reportant aux figures 4 à 6, les deux portions 10 et 20 sont ici mises en alignement, les fils de trame 12 et 22 placés en bout se faisant face ; deux éclisses 30 sont montées, depuis l'intérieur des portions 10 et 20, en sorte de recevoir dans leurs échancrures 32A-34A et 32B-34B les ailes 15, 25 desdits fils de trame 12 et 22.

Les pattes de verrouillage 35A, 35B sont, par pliage, rabattues sur les ailes 15, 25 des fils de trame 12 et 22, ce qui verrouille les éclisses 30 par rapport auxdites ailes 15, 25 des fils de trame 12, 22 et donc le raccordement des deux portions 10, 20.

Sur les figures, seule la patte 35B est montrée rabattue, en position de verrouillage.

Pour faciliter cette mise en oeuvre, il est possible de monter les deux éclisses 30 à rotation autour des ailes du fil de trame en bout d'une portion en rabattant sur les ailes dudit fil de trame la patte de verrouillage correspondante ; de la sorte, les éclisses 30 sont montées à rotation autour desdites ailes ; pour le stockage, il est avantageux de faire pivoter les éclisses 30 autour desdites ailes en les faisant notamment s'étendre le long des panneaux latéraux 14 ; la portion de chemin de câbles peut ainsi être livrée équipée, éclisses prémontées.

Pour raccorder cette portion de chemin de câbles à une autre, il suffit de rapprocher les deux portions et de déployer les éclisses vers l'extérieur, par rotation autour des ailes du fil de trame et d'introduire les ailes de l'autre fil de trame dans les échancrures concernées des éclisses, le raccordement étant terminé par pliage des pattes de verrouillage restantes.

Avantageusement, pour pouvoir être utilisées pour des portions de chemin de câbles en fil dont les fils, notamment de trame, sont de différents diamètres, les largeurs des échancrures des éclisses sont suffisantes pour recevoir ces différents diamètres et le bord des pattes de verrouillage destiné à coopérer avec les ailes des fils de trame est incliné par rapport à la charnière de pliage de la patte, c'est-à-dire qu'il ne lui est pas orthogonal, pour que le verrouillage soit efficace pour ces différents diamètres de fils.

On aura noté également que, les éclisses étant disposées entre deux fils de chaîne, on s'arrange pour que leur hauteur, à savoir la largeur de l'âme de leur corps 31 en U, soit pratiquement égale à la distance séparant ces deux fils de chaîne : de la sorte, le calage des éclisses le long des ailes des fils de trame est assuré.

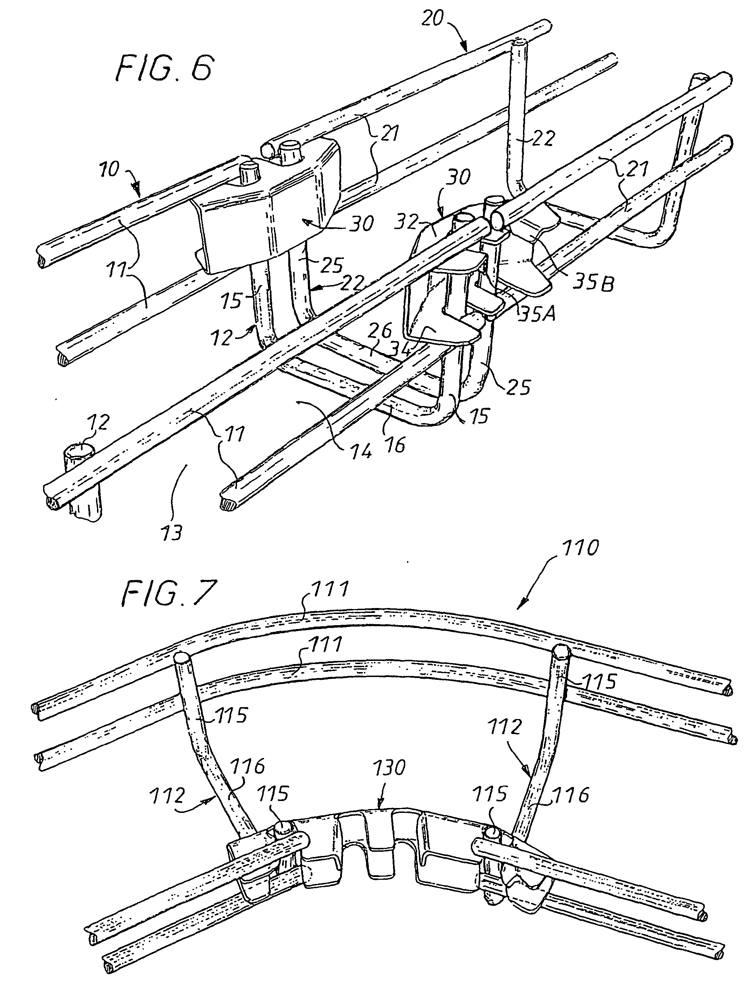

Les figures 7 à 13 montrent une variante d'éclisse selon l'invention.

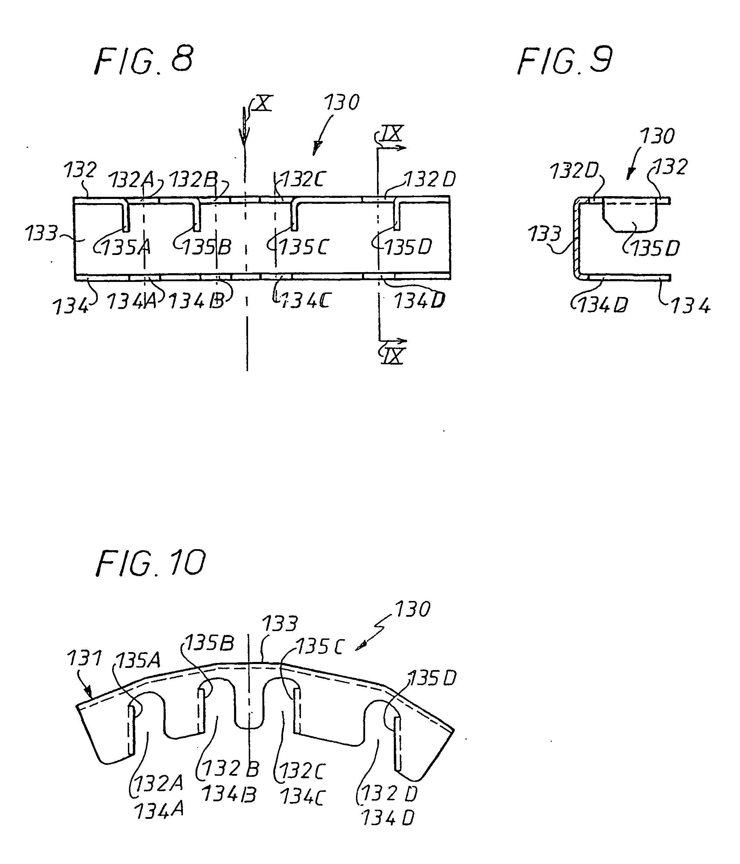

Cette variante, référencée 130, mieux visible sur les figures 8 à 10, est analogue à l'éclisse 30 mais ici chaque aile du corps en U comporte quatre échancrures.

Les constituants de l'éclisse 130 analogues à ceux de l'éclisse 30, ou jouant le même rôle, portent la référence de ceux de l'éclisse 30 augmentée de 100.

Comme on le voit sur les figures, les bords des échancrures 132A, 132B, 132C, 132D et 134A, 134B, 134C, 134D sont parallèles entre eux et l'un des bords de chaque échancrure de l'une des ailes porte une patte de verrouillage, celles-ci portant respectivement les références 135A, 135B, 135C, 135D.

La figure 7 illustre l'utilisation d'une éclisse selon l'invention en vue de réaliser un changement de direction d'un chemin de câbles, autrement dit un coude.

Dans cet exemple, le tronçon 110 tel que représenté présente latéralement deux fils longitudinaux 111 ; d'un côté, les deux fils longitudinaux ont été sectionnés pour laisser la place à une éclisse 130 tandis que, de l'autre côté, les fils longitudinaux ont été cintrés pour réaliser le coude.

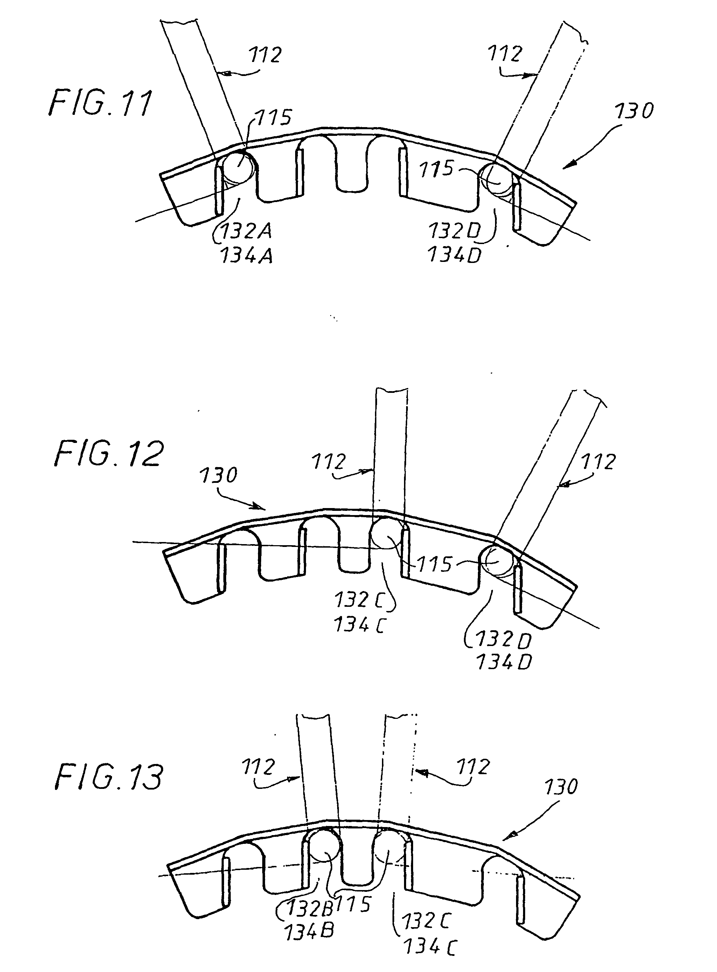

Ici, comme cela est également visible sur la figure 11 qui est une vue de dessus partielle du tronçon 110 de la figure 7, les ailes 115 des fils de trame 112 sont reçues dans les échancrures d'extrémités 132A-134A, d'une part, et 132D-134D, d'autre part, de l'éclisse 130.

Comme on l'aura remarqué, l'âme 133 du corps 131 de l'éclisse 130 est en forme de U ouvert dont les parties latérales ont été, quasiment à mi-longueur, pliées légèrement vers l'intérieur, ladite âme 133 ayant dès lors une forme polygonale à 5 côtés.

En utilisant les échancrures d'extrémités comme aux figures 7 et 11, le changement de direction du chemin de câbles est de l'ordre de 130 degrés.

En choisissant deux des quatre échancrures, il est possible, avec une même éclisse 130 d'obtenir différents changements de direction : ainsi, sur la figure 12, les échancrures 132C-134C et 132D-134D ont été choisies et l'angle est alors de l'ordre de 150 degrés ; sur la figure 13, les échancrures 132B-134B et 132C-134C conduisent à un angle de l'ordre de 170 degrés.

L'éclisse 30 des figures 1 à 6 a été montrée en raccordement de deux portions de chemin de câbles dans le prolongement l'une de l'autre ; elle pourrait bien entendu être utilisée pour la réalisation d'un coude, comme montré a propos de l'éclisse 130 ; l'éclisse 30 telle que représentée pourrait conduire à un changement de direction de l'ordre de 120 degrés.

## Revendications

1. Eclisse de raccordement pour raccorder deux portions (10,20,110) d'un chemin de câbles en fils constitué de fils de deux types différents, d'une part, des fils de chaîne (11,21,111) et, d'autre part, des fils de trame (12,22,112), le raccordement desdites deux portions (10,20,110), ainsi donc que leur assemblage, étant effectué par l'intermédiaire de leurs fils de trame (12,22,112) placés en bout, **caractérisée par le fait qu'**elle comprend un corps (31,131) en forme de U ayant deux ailes (32,132,34,134) et une âme (33,133), lesdites ailes (32-132,34-134) comportant chacune au moins deux échancrures (32A,.....132A.... 34A....134A.....) à bords parallèles, les échancrures (32A....132A....) d'une aile (32,132) faisant face aux échancrures (34A.....134A) de l'autre aile (34,134), les bords parallèles entre eux d'une échancrure étant parallèles aux bords parallèles entre eux de l'autre échancrure, l'un des bords d'au moins l'une des échancrures se faisant face portant une patte (35A.....135A.....) dite de verrouillage, lesdites pattes de verrouillage étant adaptées à être par pliage rabattues, vers l'intérieur du U du corps (31,131) en U, sur chacun desdits fils de trame (12,22,112) placés en bout.

2. Eclisse de raccordement selon la revendication 1, **caractérisée par le fait qu'**au moins une patte de verrouillage permet le montage à rotation de l'éclisse (30,130) sur une portion (10,20,110) du chemin de câbles.

3. Eclisse de raccordement selon l'une des revendications 1 ou 2, **caractérisée par le fait que** l'âme (33,133) du corps en U (31,131) est en forme de U ouvert, les ailes (32-132,34-134) du corps en U (31-131) s'étendant depuis l'âme (33,133) dans la concavité de ladite âme (33,133) en U ouvert.

4. Eclisse de raccordement selon l'une des revendications 1 à 3, **caractérisée par le fait que** l'une (34-134) des ailes du U du corps en U (31-131) porte les pattes (35A.....135A....) de verrouillage.

5. Eclisse de raccordement selon l'une des revendications 1 à 4, **caractérisée par le fait que** les pattes de verrouillage (35A... 135A....) s'étendent, avant pliage pour verrouillage, perpendiculairement aux plans des ailes (32-132,34-134).

6. Eclisse de raccordement selon la revendication 3 prise seule ou en combinaison avec l'une des revendications 4 ou 5, **caractérisée par le fait que** les échancrures (32A....132A.....34A.....134A....) s'étendent perpendiculairement au fond, qui est plan, du U ouvert de l'âme (33,133).

7. Eclisse de raccordement selon la revendication 6, **caractérisée par le fait que** les parties latérales du U ouvert constituant l'âme (33) du corps (31) s'étendent depuis le fond plat en faisant entre elles un angle de l'ordre de 120 degrés.

8. Eclisse de raccordement selon l'une des revendications 1 à 7, **caractérisée par le fait que** chaque aile (132,134) comporte quatre échancrures (132A.... 134A....).

9. Eclisse de raccordement selon la revendication 8, **caractérisée par le fait que** les distances entre deux échancrures (132A....... 134A......) adjacentes sont inégales.

10. Chemin de câbles en fils ayant deux portions en regard raccordées par au moins une éclisse de raccordement, **caractérisé par le fait que** ladite éclisse de raccordement est selon l'une des revendications 1 à 9.

11. Chemin de câbles en fils selon la revendication 10, **caractérisé par le fait que** les deux portions du chemin de câbles sont deux tronçons indépendants assemblés bout à bout.

12. Chemin de câbles en fils selon la revendication 10, **caractérisé par le fait que** les deux portions du chemin de câbles constituent un même tronçon d'un chemin de câbles, dont un panneau latéral a été sectionné, et que les deux portions sont raccordées par une éclisse de raccordement, l'éclisse ayant été mise en place dans ladite section après mise en forme de l'autre panneau latéral, ce qui permet de réaliser un coude sur le chemin de câbles.

13. Chemin de câbles selon l'une des revendications 10 à 12, **caractérisé par le fait que** l'éclisse (30,130) est montée par ses échancrures sur des fils de trame (12,22,112) placés en bout, et se faisant face, des deux portions (10,20,110), les pattes (35A....135A....) étant rabattues sur lesdites ailes (15, 25,115).

14. Chemin de câbles selon la revendication 13, **caractérisé par le fait que** l'éclisse (30,130) est montée sur les fils de trame (12,22,112) depuis l'intérieur du chemin de câbles, son âme (33,133) étant située à l'intérieur de celui-ci.

15. Chemin de câbles selon l'une des revendications 10 à 14, **caractérisé par le fait que** l'éclisse (30,130) s'étend entre deux fils de chaîne (11,21,111).

16. Chemin de câbles selon la revendication 15, **caractérisé par le fait que** la largeur de l'âme (33,133) du corps en U de l'éclisse (30,130) est globalement égale, au jeu de montage près, à la distance qui sépare les deux fils de chaîne (11,21,111) entre lesquels elle s'étend.

17. Portion de chemin de câbles en fils, **caractérisée par le fait qu'**elle est équipée d'au moins une éclisse de raccordement selon l'une des revendications 1 à 9, ladite éclisse (30,130) étant montée à pivotement autour d'une aile (15,25,115) d'un fil de trame (12,22,112) en bout et s'étendant à l'intérieur de la portion du chemin de câbles (10,20,110) le long de son panneau latéral (14,24,114) défini notamment par ladite aile (15,25,115).

## Patentansprüche

1. Verbindungsschiene, um zwei Teile (10, 20, 110) einer Draht-Kabelwanne zu verbinden, die aus zwei unterschiedlichen Drahttypen besteht, zum einen aus Längsdrähten (11, 21, 111) und zum anderen aus Querdrähten (12, 22, 112), wobei die Verbindung ebenso wie der Zusammenbau der beiden Teile (10, 20, 110) über ihre am Ende angeordneten Que rdrähte (12, 22, 112) erfolgt, **dadurch gekennzeichnet, dass** sie einen U-förmigen Körper (31, 131) mit zwei Schenkeln (32, 132, 34, 134) und einem Steg (33, 133) aufweist, wobei die Schenkel (32-132, 34-134) jeweils mindestens zwei Aussparungen (32A.... 132A.... 34A.... 134A....) mit parallelen Rändern aufweist, wobei die Aussparungen (32A.... 132A....) eines Schenkels (32, 132) den Aussparungen (34A.... 134A) des anderen Schenkels (34, 134) gegenüberliegen, wobei die zueinander parallelen Ränder einer Aussparung parallel sind zu den zueinander parallelen Ränder der anderen Aussparung, wobei einer der Ränder von mindestens einer der sich gegenüberli egenden Aussparungen eine so genannte Verriegelungslasche (35A.... 135A....) trägt, wobei die Verriegelungslaschen ausgebildet sind, um durch Biegen ins Innere des U des U-förmigen Körpers (31, 131) auf jeden der am Ende angeordneten Querdrähte (12, 22, 112) umgeschlagen zu werden.

2. Verbindungsschiene nach Anspruch 1, **dadurch gekennzeichnet, dass** mindestens eine Verriegelungslasche die schwenkb a-re Anbringung der Schiene (30, 130) auf einem Teil (10, 20, 110) der Kabelwanne ermöglicht.

3. Verbindungsschiene nach einem der Ansprüche 1 oder 2, **dadurch gekennzeichnet, dass** der Steg (33, 133) des U-förmigen Körpers (31, 131) die Form eines geöffneten U aufweist, wobei die Schenkel (32-132, 34-134) des U-förmigen Körpers (31-131) sich, vom Steg (33, 133) ausgehend, auf der konkaven Seite dieses Steges (33, 133) in einem offenen U erstrecken.

4. Verbindungsschiene nach einem der Ansprüche 1 bis 3, **dadurch gekennzeichnet, dass** einer der Schenkel (3 4-134) des U des U-förmigen Körpers (31-131) die Verriegelungslaschen (35A.... 135A....) trägt.

5. Verbindungsschiene nach einem der Ansprüche 1 bis 4, **dadurch gekennzeichnet, dass** die Verriegelungslaschen (35A.... 135A....) sich vor ihrem Umbiegen zur Verriegelung senkrecht zu den Ebenen der Schenkel (32-132, 34-134) erstrecken.

6. Verbindungsschiene nach Anspruch 3 für sich allein betrachtet oder in Kombination mit einem der Ansprüche 4 oder 5, **dadurch gekennzeichnet, dass** die Aussparungen (32A.... 132A.... 34A.... 134A....) senkrecht zum geraden Boden des geöffneten U des Steges (33, 133) verlaufen.

7. Verbindungsschiene nach Anspruch 6, **dadurch gekennzeichnet, dass** die den Steg (33) des Körpers (31) bildenden Seitenbereiche des geöffneten U vom flachen Boden aus gehend verlaufen, wobei sie zwischen sich einen Winkel der Größenordnung 120 Grad bilden.

8. Verbindungsschiene nach einem der Ansprüche 1 bis 7, **dadurch gekennzeichnet, dass** jeder Schenkel (132, 134) vier Aussparungen (132A.... 134A....) aufweist.

9. Verbindungsschiene nach Anspruch 8, **dadurch gekennzeichnet, dass** die Abstände zwischen zwei benachbarten Aussparungen (132A.... 134A....) unterschiedlich sind.

10. Draht-Kabelwanne mit zwei gegenüberliegenden Teilen, die durch mindestens eine Verbindungsschiene verbunden sind, **dadurch gekennzeichnet, dass** diese Verbindungsschiene nach einem der Ansprüche 1 bis 9 ist.

11. Draht-Kabelwanne nach Anspruch 10, **dadurch gekennzeichnet, dass** die beiden Teile der Kabelwanne unabhängige A b-schnitte sind, die stumpf miteinander verbunden sind.

12. Draht-Kabelwanne nach Anspruch 10, **dadurch gekennzeichnet, dass** die beiden Teile der Kabelwanne den gleichen Kabelwannenabschnitt bilden, von dem eine Seitenplatte unterteilt wurde, und dass die beiden Teile durch eine Verbindungsschiene miteinander verbunden sind, wobei die Schiene in diesen Schnittbereich eingesetzt wurde, nachdem die andere Seitenplatte in Form gebracht wurde, **dadurch** wird ermöglicht, das auf der Kabelwanne eine gekrümmte Form gebildet wird.

13. Kabelwanne nach einem der Ansprüche 10 bis 12, **dadurch gekennzeichnet, dass** die Schiene (30, 130) mit ihren Aussparungen auf die Querdrähte (12, 22, 112) montiert ist, die am Ende der beiden Teile (10, 20, 110) und einander gegenübe r-liegend angeordnet sind, wobei die Laschen (35A.... 135A....) auf die Schenkel (15, 25, 115) umgeschlagen sind.

14. Kabelwanne nach Anspruch 13, **dadurch gekennzeichnet, dass** die Schiene (30, 130) vom Inneren der Kabelwanne ausgehend auf den Querdrähten (12, 22, 112) angebracht ist, wobei der Steg (33, 133) der Schiene im Inneren der Kabelwanne angeordnet ist.

15. Kabelwanne, nach einem der Ansprüche 10 bis 14, **dadurch gekennzeichnet, dass** die Schiene (30, 130) zwischen zwei Längsdrähten (11, 21, 111) verläuft.

16. Kabelwanne nach Anspruch 15, **dadurch gekennzeichnet, dass** die Breite des Steges (33, 133) des U-förmigen Körpers der Schiene (30, 130) abgesehen vom Montagespielraum global dem Abstand entspricht, der die beiden Längsdrähte (11, 21, 111) voneinander trennt, zwischen denen sie verläuft.

17. Draht-Kabelwannen-Teil, **dadurch gekennzeichnet, dass** er mit mindestens einer Verbindungsschiene nach einem der Ansprüche 1 bis 9 versehen ist, wobei die Schiene (30, 130) um einen Schenkel (15, 25, 115) eines am Ende angeordneten Querdrahts (12, 22, 112) schwenkbar angebracht ist und im Inneren des Teils der Kabelwanne (10, 20, 110), entlang ihrer Seitenplatte (14, 24, 114) verläuft, die insbesondere durch den Schenkel (15, 25, 115) definiert wird.

## Claims

1. A fishplate for connecting two portions (10, 20, 110) of a wire cable tray constituted by wires of two different types, on the one hand, warp wires (11, 21, 111) and, on the other hand, weft wires (12, 22, 112), said two portions (10, 20, 110) being connected and thus assembled by means of their end weft wires (12, 22, 112), **characterized in that** it comprises a U-shaped body (31, 131) having two flanges (32, 132, 34, 134) and a web (33, 133), said flanges (32-132, 34-134) each comprising at least two notches (32A,...132A... 34A...134A...) with parallel edges, the notches (32A...132A...) of one flange (32, 132) facing the notches (34A...134A) of the other flange (34, 134), the parallel edges of one notch being parallel to the parallel edges of the other notch, one of the edges of at least one of the facing notches carrying a locking lug (35A,...135A...), and said locking lugs being adapted to be bent over towards the interior of the U-shape of the U-shaped body (31, 131) over each of said end weft wires (12, 22, 112).

2. A fishplate according to claim 1, **characterized in that** at least one locking lug enables rotatable mounting of the fishplate (30, 130) on a portion (10, 20, 110) of the cable tray.

3. A fishplate according to either claim 1 or claim 2, **characterized in that** the web (33, 133) of the U-shaped body (31, 131) has an open U-shape, the flanges (32-132, 34-134) of the U-shaped body (31-131) extending from the web (33, 133) on the concave side of said open U-shaped web (33, 133).

4. A fishplate according to one of claims 1 to 3, **characterized in that** one flange (34-134) of the U-shape of the U-shaped body (31-131) carries the locking lugs (35A...135A...).

5. A fishplate according to one of claims 1 to 4, **characterized in that** the locking lugs (35A...135A...) extend perpendicularly to the planes of the flanges (32-132, 34-134) before they are bent over to lock them.

6. A fishplate according to claim 3 alone or in combination with claim 4 or claim 5, **characterized in that** the notches (32A...132A...34A...134A...) extend perpendicularly to the flat bottom of the open U-shape of the web (33, 133).

7. A fishplate according to claim 6, **characterized in that** the lateral parts of the open U-shape constituting the web (33) of the body (31) extend from the flat bottom with an angle between them of the order of 120 degrees.

8. A fishplate according to one of claims 1 to 7, **characterized in that** each flange (132, 134) comprises four notches (132A...134A...).

9. A fishplate according to claim 8, **characterized in that** the distances between two adjacent notches (132A...134A...) are not equal.

10. A wire cable tray having two facing portions connected by at least one fishplate, **characterized in that** said fishplate conforms to any of claims 1 to 9.

11. A wire cable tray according to claim 10, **characterized in that** the two portions of the cable tray are two independent sections assembled end to end.

12. A wire cable tray according to claim 10, **characterized in that** the two portions of the cable tray are parts of the same cable tray section, one lateral panel of which has been cut, and **in that** the two portions are connected by a fishplate fitted to said section after shaping the other lateral panel, enabling a bend to be produced in the cable tray.

13. A cable tray according to one of claims 10 to 12, **characterized in that** the fishplate (30, 130) is mounted by means of its notches on the facing end weft wires (12, 22, 112) of the two portions (10, 20, 110), the lugs (35A...135A...) being bent over said flanges (15, 25, 115).

14. A cable tray according to claim 13, **characterized in that** the fishplate (30, 130) is mounted on the weft wires (12, 22, 112) from the interior of the cable tray, its web (33, 133) being situated inside the cable tray.

15. A cable tray according to one of claims 10 to 14, **characterized in that** the fishplate (30, 130) extends between two warp wires (11, 21, 111).

16. A cable tray according to claim 15, **characterized in that**, ignoring assembly clearances, the width of the web (33, 133) of the U-shaped body of the fishplate (30, 130) is globally equal to the distance between the two warp wires (11, 21, 111) between which it extends.

17. A wire cable tray portion, **characterized in that** it is equipped with at least one fishplate according to any one of claims 1 to 9, said fishplate (30, 130) being pivotally mounted on one flange (15, 25, 115) of an end weft wire (12, 22, 112) and extending inside the portion of the cable tray (10, 20, 110) along its lateral panel (14, 24, 114) defined in particular by said flange (15, 25, 115).
